# EUROPEAN PATENT SPECIFICATION

(11) **EP 2 551 646 B1**
(45) Date of publication and mention of the grant of the patent: **16.11.2016**
(21) Application number: 12176064.9
(22) Date of filing: 12.07.2012
(51) Int. Cl.: G01D 5/347

(54) **Scale and manufacturing method thereof, and absolute encoder**
Skala und Herstellungsverfahren dafür und Absolutkodierer
Échelle et son procédé de fabrication et codeur absolu

(30) Priority: 26.07.2011 JP 2011163689
(43) Date of publication of application: 30.01.2013
(73) Proprietor: Canon Kabushiki Kaisha, Tokyo 146-8501 (JP)
(72) Inventor: Ishizuka, Ko, Tokyo 146-8501 (JP)
(74) Representative: TBK

(56) References cited:
- EP-A1- 2 051 047
- EP-A2- 2 112 477
- EP-A2- 2 538 179
- JP-A- 61 045 923
- US-A1- 2004 200 957

## Description

### BACKGROUND OF THE INVENTION

### Field of the Invention

The present invention relates to a scale and manufacturing method thereof, and an absolute encoder.

### Description of the Related Art

Conventionally, an absolute encoder is used for the purpose of measuring a position and angle. Japanese Utility Model Laid-Open No. 60-152916, Japanese Patent Laid-Open No. 1-152314, and Japanese Patent Laid-Open No. 2004-529344 disclose an absolute encoder, which irradiates marks randomly arranged in a moving direction of a scale with a light beam, and extracts the presence/absence of detection light which is transmitted through or reflected by the marks as codes, thus reading out an absolute code. In order to extract detection light, on the scale of the absolute encoder disclosed in Japanese Utility Model Laid-Open No. 60-152916, Japanese Patent Laid-Open No. 1-152314, and Japanese Patent Laid-Open No. 2004-529344,
transmissive marks and non-transmissive marks, or reflective marks and non-reflective marks are randomly arranged in the moving direction of the scale. Hence, in order to enhance the resolution of the absolute encoder, the fineness of elements in an imaging optical system and light-receiving element array is required.

In an incremental encoder, transmissive marks and non-transmissive marks (or reflective marks and non-reflective marks) are regularly arranged on the entire region of a scale. On the other hand, in the absolute encoder, transmissive marks and non-transmissive marks (or reflective marks and non-reflective marks) are not regularly arranged on the entire region of the scale. For this reason, when the scale of the absolute encoder is to be manufactured, a transfer technique using a "photomask" or "mold" that can be used to manufacture the scale of the incremental encoder cannot often be used intact. For example, when the scale is longer than the "photomask" or "mold", a plurality of transfer processes are required, and a plurality of types of "photomasks" or "molds" are required for this purpose. Hence, upon forming the marks on the scale of the absolute encoder, a direct exposure fabrication method using a laser lithography apparatus or the like is used. However, in order to enhance the resolution of the absolute encoder, a large number of fine marks have to be exposed on a base of the scale with high precision. For this purpose, the laser lithography apparatus has to have fine grids, resulting in a longer exposure time and poor productivity.

According to document US 2004/200957 A1, reflective members for use in encoder systems are provided. Disclosed is a reflective member which comprises a reflective layer, at least another layer, and a reflective pattern comprising a first portion having a first reflective property and a second portion having a different reflective property. The reflective layer forms at least a part of the reflective pattern. In addition, the aforementioned first portion of the reflective member has a width of less than half of the grating period. The reflective member enables measurement of at least one operational attribute of an object.

Document EP 2051047 A1 discloses a reflection type encoder which receives a plurality of light-receiving signals from a single scale, includes a light source, a scale having a plurality of patterns formed thereon to which light is irradiated from the light source, and a light-receiving element for receiving light reflected from each of the plurality of patterns, wherein a plurality of patterns each having different thicknesses are formed on a single track of the scale by using a dielectric substance, light of a plurality of wavelengths each having different brightness in accordance with differences in the thickness of the dielectric substance is irradiated from the light source, and a light-receiving signal is obtained for the respective thicknesses of the dielectric substance. Therefore, the scale can be downsized by overlapping a plurality of patterns on the same track.

Document EP 2112477 A2 treats the problem to provide a scale for a photoelectric encoder effectively protecting the base thereof from corrosion, rust, and flaws. To solve this problem, a scale having a base, a light-absorbing layer including a DLC layer formed at least on an area of the surface of the base, and light-reflecting layers with a higher reflectance than that of the light-absorbing layer against light falling within a wavelength range and formed into a grating on the light-absorbing layer is provided.

Document JP 61-045923 A treats the problem to easily form a precise light absorption pattern by coating a metallic plate which has a high reflection factor with a photosensitive agent with which a pigment absorbing light is mixed, then bringing a specific mask into contact with the coating surface and performing exposure and development, and peeling the photosensitive agent of an unexposed part. To solve this problem, a surface of an aluminum plate is finished into a specular surface and an alumite treatment is performed to form a very thin alumite layer of about 3µm thickness. The layer is coated with a pigment-containing photosensitive agent formed by mixing a black pigment with a diazo photosensitive agent to an about 2 to 3µm thickness to form a pigment-containing photosensitive agent layer 3. Then, the specific mask is brought into contact with the layer to perform exposure and development, and the layer at the part which is not exposed is peeled off to form a black pattern on the plate. Low-temperature baking laquer is applied and baked to finish the disk to specific internal and external diameters.

Post published document EP 2538179 A2 discloses a two-dimensional absolute encoder comprising a scale (SCL) on which marks are arranged at predetermined pitches along first and second directions, a detector (PDA) configured to detect a number of marks arranged in each direction, and a processor (PRO) configured to obtain an absolute position of the scale in the each direction based on outputs from the detector. Each mark has one of characteristic corresponding to information of a quantized code used for indicating a position in the each direction. The processor is configured to generate a code sequence including the number of codes based on detection of the number of marks and information corresponding to the characteristic, and to obtain an absolute position of the scale in the each direction based on the code sequence.

### SUMMARY OF THE INVENTION

It is the object of the present invention to provide a scale useful for an absolute encoder having a high resolution.

The object is achieved by a scale according to claim 1 and by a method according to claim 11, respectively.

Advantageous embodiments are carried out according to the dependent claims.

The present invention in its first aspect provides a scale for an absolute encoder as specified in claims 1 to 9.

The present invention in its second aspect provides an absolute encoder as specified in claim 10.

The present invention in its third aspect provides a method of manufacturing a scale for an absolute encoder as specified in claims 11 to 13.

Further features of the present invention will become apparent from the following description of exemplary embodiments with reference to the attached drawings.

### BRIEF DESCRIPTION OF THE DRAWINGS

Fig. 1 is a view showing an example of an absolute encoder;
Figs. 2A and 2B are views showing the manufacturing sequence of a scale, and states of detection light reflected by marks according to the first embodiment;
Figs. 3A and 3B are views showing the manufacturing sequence of a scale, and states of detection light reflected by marks according to the second embodiment;
Figs. 4A and 4B are views showing the manufacturing sequence of a scale, and states of detection light transmitted through marks according to the third embodiment;
Figs. 5A and 5B are views showing a scale according to the fourth embodiment; and
Figs. 6A and 6B are views showing a scale of a two-dimensional absolute encoder according to the fifth embodiment.

### DESCRIPTION OF THE EMBODIMENTS

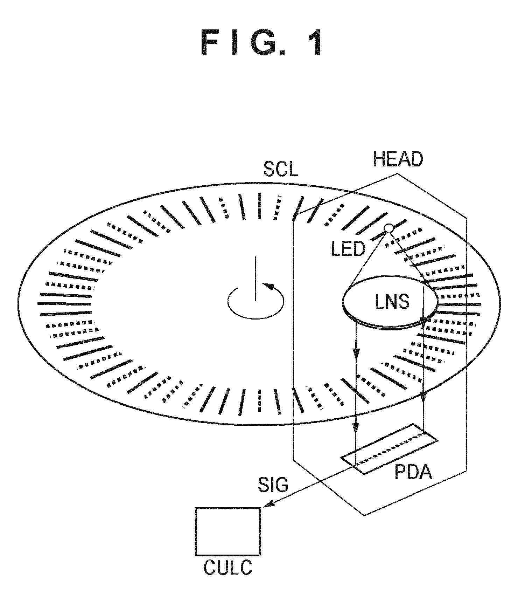

The arrangement of an absolute encoder will be described below using a transmissive absolute rotary encoder shown in Fig. 1. The absolute rotary encoder measures an absolute rotation angle of a scale SCL, which rotates to have a rotation axis as the center of rotation. The absolute rotation angle is measured by detecting, using a detection head HEAD, a predetermined number of marks of a plurality of marks, which are arranged on the scale SCL at predetermined pitches. A diverging light beam emitted by a point light source LED is collimated into a parallel beam by a collimator lens LNS. The parallel beam illuminates the scale SCL, which is embedded with an M-bit absolute code defined by a plurality of types of marks having different transmittances, and is relatively rotated and moved. Note that the transmittance is specified with respect to a wavelength of light emitted by the point light source LED.

On the scale SCL, non-transmissive marks are radially arranged at equal angular intervals about the central axis of the scale SCL, and transmissive or semi-transmissive marks are arranged between neighboring non-transmissive marks. Of course, on the scale SCL, transmissive marks may be radially arranged at equal angular intervals, and non-transmissive or semi-transmissive marks may be arranged between neighboring transmissive marks. The semi-transmissive mark can be realized by adding a semi-transmissive thin film to the transmissive mark, reducing the transmissive mark in size, partially shielding the transmissive mark using, for example, a hatching pattern, or the like, and any of these methods may be used as long as a transmission light amount is decreased. Fig. 1 illustrates the semi-transmissive marks by dotted lines, and the transmissive marks by solid lines.

Two types of marks, that is, semi-transmissive marks and transmissive marks are arranged at given intervals (pitches) to define an M-bit absolute code. In the example of Fig. 1, the two types of marks have the same shape but different transmittances, and they have uniform transmittances in the marks. Light transmitted through the semi-transmissive marks and transmissive marks of the scale SCL is received by a detector (light-receiving element array) PDA. The light-receiving element array PDA outputs a signal SIG of the received light to a calculation device CULC (processor), which obtains an angle (absolute angle) of the scale SCL based on the output from the light-receiving element array PDA. In Fig. 1, the rotary encoder has been described. However, the present invention is applicable to a linear encoder which measures a position (absolute position) of the scale SCL.

Embodiments which relate to the scale of the absolute encoder will be described in detail hereinafter.

### [First Embodiment]

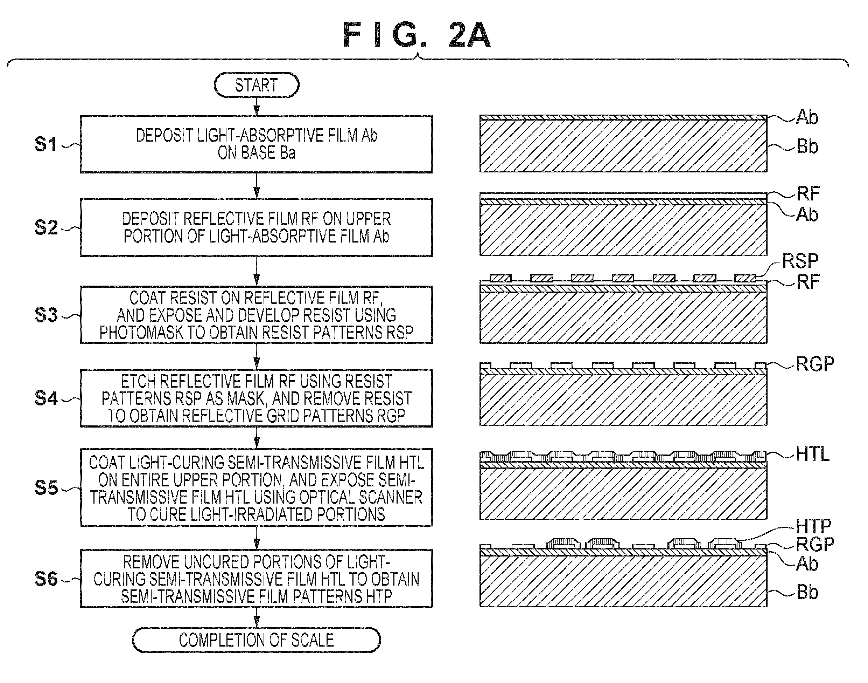

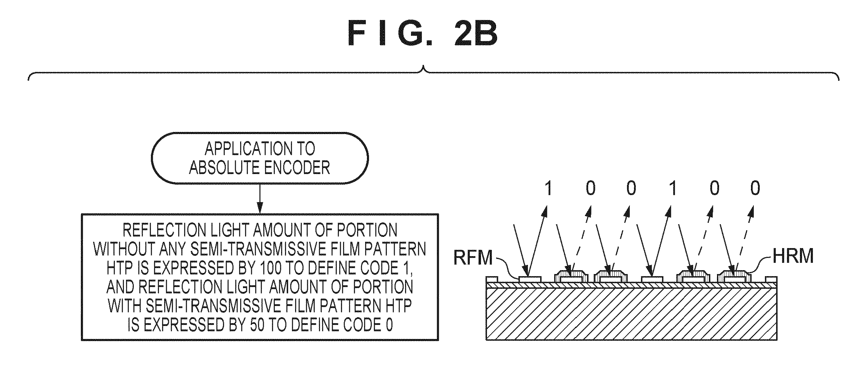

Figs. 2A and 2B respectively show the manufacturing sequence of a scale, and states of detection light reflected by marks according to the first embodiment. In step S1, a light-absorptive film (black film) Ab such as chromium oxide is deposited on a base Ba such as SUS or low-expansion glass. The base Ba on which the light-absorptive film Ab is deposited in step S1 forms a light-absorptive base. In step S2, a film RF of a reflective material such as a metal film is deposited on the light-absorptive film Ab. In step S3, a resist is coated on the reflective material film RF, is exposed and developed using a photomask, thereby forming resist patterns RSP having given pitches. In step S4, the reflective material film RF is etched using the resist patterns RSP as a mask to remove the resist patterns RSP, thus forming patterns RGP of reflective material marks having predetermined pitches. In steps S1 to S4, the base including the plurality of light-reflective marks, which are arranged at predetermined pitches, is prepared. Upon completion of the processes up to step S4, the mark patterns RGP, on which reflective material marks are regularly arranged on the light-absorptive film Ab at the predetermined pitches, and which are equivalent to the scale of a normal reflective incremental encoder, are obtained.

In step S5, a photosensitive solution prepared by dispersing a coloring agent (light-absorptive material) such as a pigment or dye in a photosensitive transparent resin is coated on the reflective material mark patterns RGP, thus forming a photosensitive resin layer HTL having a first thickness. Furthermore, in step S5, the photosensitive resin layer HTL is selectively exposed with a light beam having a wavelength falling within blue to ultraviolet ranges using an optical scanner such as a galvano scanner or polygon scanner, thereby curing exposed portions. In step S6, the photosensitive resin layer HTL is developed to remove uncured portions, thereby forming patterns HTP of low-reflective marks HRM formed by arranging a color layer that attenuates light on the specific reflective materials. In steps S5 and S6, the light attenuating film is formed on some of the plurality of marks. Assume that type and concentration of the coloring agent, the thickness of the color layer, and the like are managed (selected), so that a transmittance of light which reciprocates through the color layer at a wavelength of a light-emitting element of the light source LED used in the absolute encoder is, for example, 50%. The reflective material on which no color layer is arranged forms a high-reflective mark RFM. When a reflection light amount of the high-reflective mark RFM without any color layer is expressed by 100%, that of a low-reflective mark HRM covered by the color layer is expressed by, for example, 50%, thereby discriminating reflectances. As a result, the reflective mark RFM and semi-reflective mark HRM can be respectively associated with "1" and "0" of cyclic codes of the absolute encoder, as shown in Fig. 2B.

As shown in Fig. 1, an end portion of the color layer which covers a portion of the reflective material of the low-reflective mark HRM does not match that of the low-reflective mark HRM. However, an optical boundary of the low-reflective mark HRM is decided by the end portion of the mark portion of the reflective material covered by the color layer. Hence, the color layer may have low boundary precision. For this reason, a grid required to expose the color layer by the optical scanner may be coarse, and high-speed exposure can be attained using the optical scanner using a large light beam width. Note that the reflection light amount of the low-reflective mark HRM is not always required to be half that of the high-reflective mark RFM, and may assume another value as long as the reflection light amounts can be discriminated. In this embodiment, on the low-reflective mark HRM, the color layer is arranged on the entire reflective material, but it may be arranged on at least a portion of the reflective material.

### [Second Embodiment]

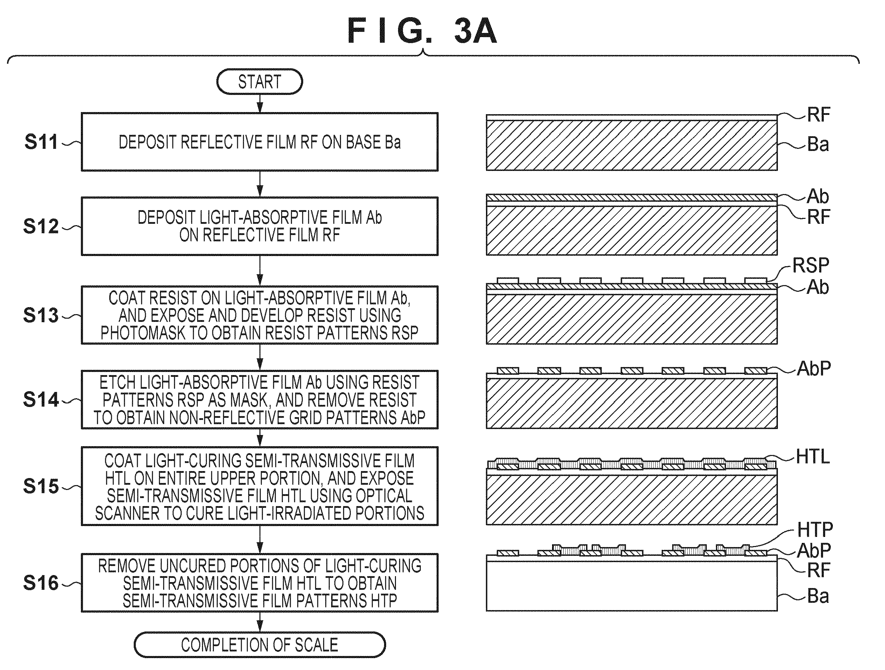

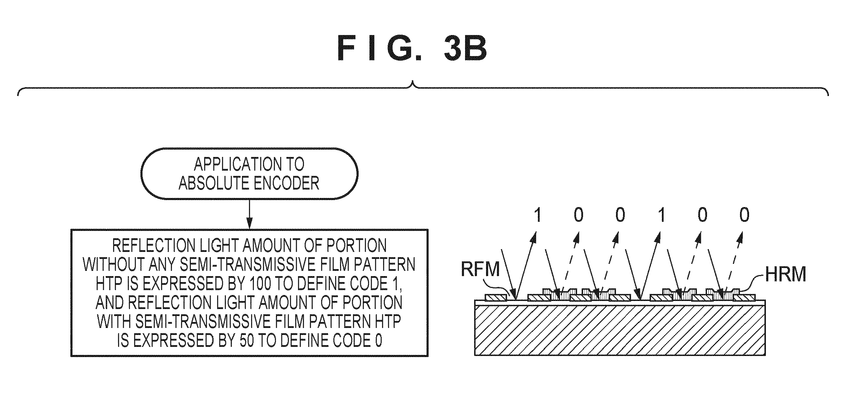

Figs. 3A and 3B respectively show the manufacturing sequence of a scale, and states of detection light reflected by marks according to the second embodiment. In step S11, a metal film (reflective film) RF is deposited on an upper portion of a base Ba made up of a material such as SUS or glass. In the second embodiment, in step S11, the base Ba including the reflective film RF deposited in step S11 forms a light-reflective base. In step S12, a light-absorptive film (non-reflective member) Ab such as chromium oxide is deposited on the reflective film RF. In step S13, a resist is coated on the light-absorptive film Ab, is exposed and developed using a photomask, thus forming resist patterns RSP. In step S14, the light-absorptive film Ab is etched using the resist patterns RSP as a mask to remove the resist patterns RSP, thereby forming periodic patterns AbP of light-absorptive material marks AbM.

In step S15, a photosensitive solution prepared by dispersing a coloring agent (light-absorptive material) such as a pigment or dye in a photosensitive transparent resin is coated on the periodic patterns AbP of the light-absorptive material marks AbM, thus forming a photosensitive resin layer HTL. Furthermore, in step S15, the photosensitive resin layer HTL is selectively exposed with a light beam having a wavelength falling within blue to ultraviolet ranges using an optical scanner such as a galvano scanner or polygon scanner, thereby curing exposed portions. In step S16, the photosensitive resin layer HTL is developed to remove uncured portions, thereby forming color layer (semi-transmissive layer) patterns HTP. Of a plurality of regions sandwiched between neighboring light-absorptive material marks AbM on the reflective film RF, regions which are not covered by the color layer form high-reflective marks RFM, and portions covered by the color layer form low-reflective marks HRM. The high-reflective mark RFM and low-reflective mark HRM can be respectively associated with "1" and "0" of cyclic codes of the absolute encoder based on their different reflection light amounts, as shown in Fig. 3B.

### [Third Embodiment]

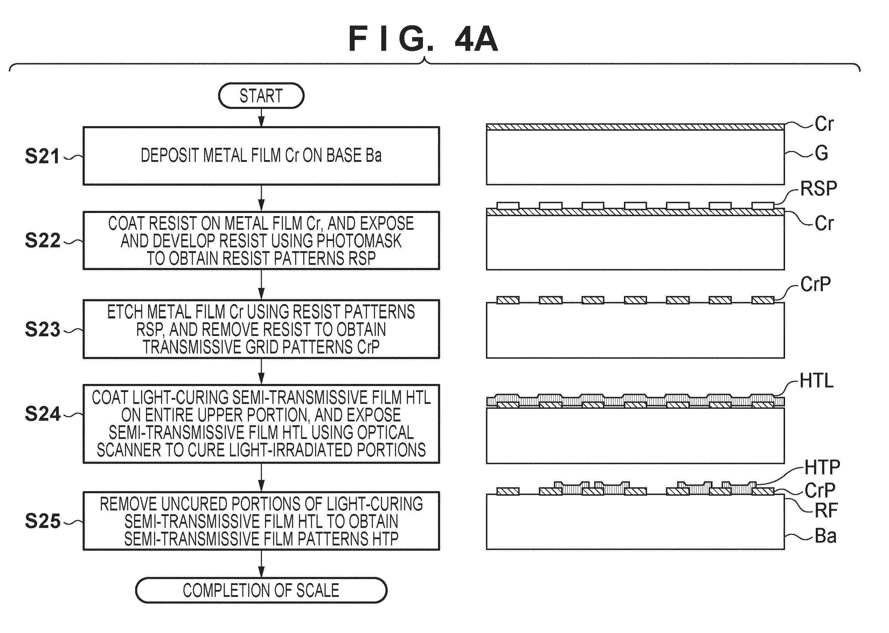

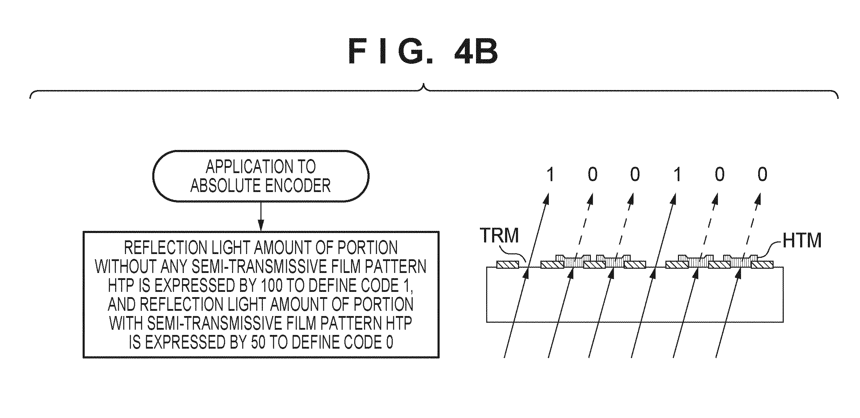

Figs. 4A and 4B respectively show the manufacturing sequence of a transmissive scale according to the third embodiment. In step S21, a non-transmissive film Cr of a light-absorptive material such as a chromium metal film is deposited on a base G made up of a light-transmissive material such as glass. In the third embodiment, the base G forms a light-transmissive base. In step S22, a resist is coated on the non-transmissive film Cr, is exposed and developed using a photomask, thereby forming resist patterns RSP. In step S23, the non-transmissive film Cr is etched using the resist patterns RSP as a mask to remove the resist patterns RSP, thereby forming non-transmissive film periodic patterns CrP.

In step S24, a photosensitive solution prepared by dispersing a coloring agent (light-absorptive material) such as a pigment or dye in a photosensitive transparent resin is coated on the non-transmissive film periodic patterns CrP, thereby forming a photosensitive resin layer HTL. Furthermore, in step S24, the photosensitive resin layer HTL is selectively exposed with a light beam having a wavelength falling within blue to ultraviolet ranges using an optical scanner such as a galvano scanner or polygon scanner, thereby curing exposed portions. In step S25, the photosensitive resin layer HTL is developed to remove uncured portions, thereby forming color layer (semi-transmissive layer) patterns HTP. Assume that the type and concentration of the coloring agent, the thickness of the color layer, and the like are managed (selected), so that a transmittance upon transmitting through the color layer at a wavelength of a light-emitting element of the light source LED used in the absolute encoder is, for example, 50%. Of regions where no non-transmissive film periodic patterns Cr are formed on the base G, portions which are not covered by the color layer form high-transmissive marks TRM, and portions covered by the color layer form low-transmissive marks HTM. The high-transmissive mark TRM and low-transmissive mark HTM can be respectively associated with "1" and "0" of cyclic codes of the absolute encoder based on their different transmission light amounts, as shown in Fig. 4B.

### [Fourth Embodiment]

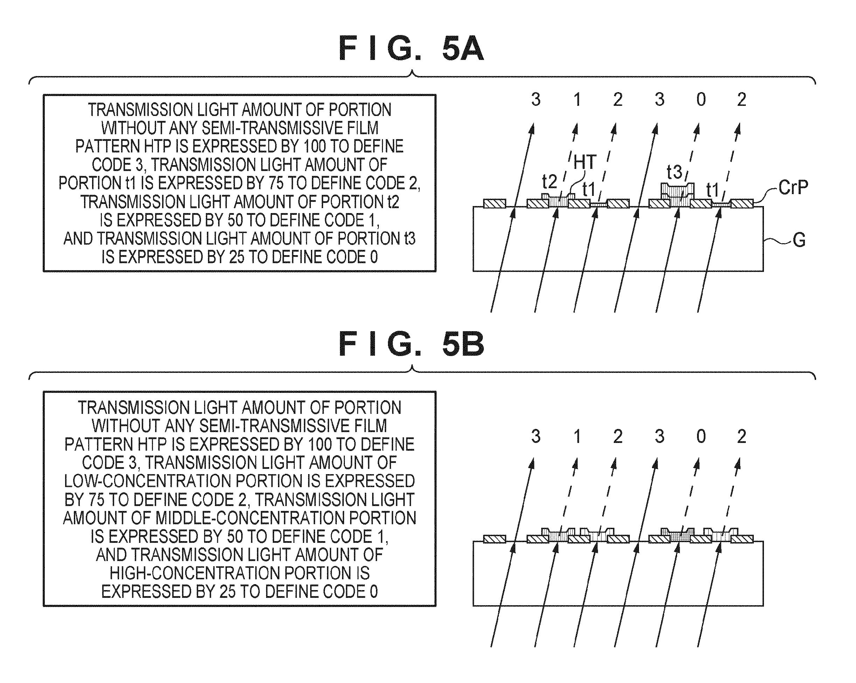

Figs. 5A and 5B show a transmissive scale according to the fourth embodiment. The scale shown in Fig. 5A is prepared by forming non-transmissive film patterns CrP on a base G made up of a material such as glass. Furthermore, color layers (light-absorptive layers) HT are selectively applied and arranged on portions where no non-transmissive film patterns CrP are formed on the base G. In this case, since the color layers HT have the same composition but different thicknesses, different attenuation degrees of light are set. In the example of Fig. 5A, when a transmission light amount of a portion without the color layer HT is expressed by 100, that of a portion having a color layer thickness t1 is expressed by 75, that of a portion having a color layer thickness t2 is expressed by 50, and that of a portion having a color layer thickness t3 is expressed by 25. That is, marks of three or more types can be formed on portions without any non-transmissive film patterns CrP. The example of Fig. 5A includes four types of marks having different attenuation degrees of light.

By arranging these four types of marks, a scale of an absolute encoder using quaternary cyclic codes can be implemented. Using the color layer HT having the same composition of the transparent resin and light-absorptive material, transmittances of the four types of marks are set at four levels, that is, 100, 75, 50, and 25. However, other transmittance values and other numbers of levels (numbers of tones) may be used. That is, letting M be the number of tones of a light amount, a scale of an absolute encoder using M-ary cyclic codes can be implemented. Alternatively, transmittances of different levels may be set as follows. That is, in place of the thicknesses of the color layers, four different concentrations of the coloring agent or the like may be set, as shown in Fig. 5B. Thus, different transmittance may be set using different compositions of the transparent resin and light-absorptive material. Also, a method of changing drawing density (area density) of an ink including the coloring agent is available. In this case, a print technique such as an ink-jet printer can be used.

### [Fifth Embodiment]

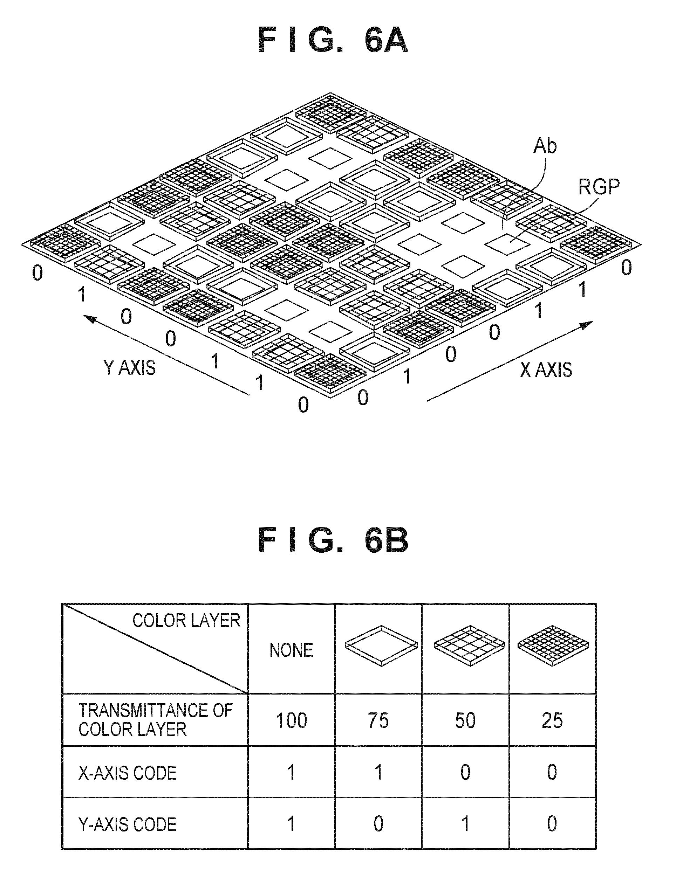

Figs. 6A and 6B show a scale of a two-dimensional absolute encoder according to the fifth embodiment. As shown in Fig. 6A, the scale of the fifth embodiment is prepared by depositing a non-reflective (light-absorptive film) Ab on a two-dimensional substrate, and two-dimensionally forming square reflective patterns RGP on the film Ab at equal intervals. Furthermore, color layers (semi-transmissive layers) of three types, which respectively have transmittances of 75%, 50%, and 25%, are selectively arranged on these reflective patterns RGP. A square reflective pattern on which no color layer is arranged defines mark 1. A square reflective pattern on which the color layer having the transmittance of 75% is arranged defines mark 2. A square reflective pattern on which the color layer having the transmittance of 50% is arranged defines mark 3. A square reflective pattern on which the color layer having the transmittance of 25% is arranged defines mark 4. Cyclic code sequences are respectively set on X and Y axes. Then, for example, mark 1 is associated with (arranged at) a position (location) expressed by (1, 1) indicating that both X- and Y-axis codes are "1". Mark 2 is associated with a position expressed by (1, 0) indicating that X- and Y-axis codes are respectively "1" and "0". Mark 3 is associated with a position expressed by (0, 1) indicating that X-and Y-axis codes are respectively "0" and "1". Mark 4 is associated with a position expressed by (0, 0) indicating that both X- and Y-axis codes are "0".

Hence, by reading (detecting) N marks in the X-axis direction, and converting values of light amounts of light reflected by the N marks into X-axis codes, an absolute position of the scale in the X-axis direction can be measured. Likewise, by reading N marks in the Y-axis direction, and converting values of light amounts of light reflected by the N marks into Y-axis codes, an absolute position of the scale in the Y-axis direction can be measured. That is, according to the fifth embodiment, the scale having information of two-dimensional absolute codes can be provided. In this embodiment, different concentrations are set to change transmittances of the color layers. Alternatively, different thicknesses of the color layers may be set.

### [Other Embodiments]

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

For example, the following modifications may be made.

A tape- or sheet-like member is used as a base.

The present invention is applicable to a scale of both a linear encoder and rotary encoder.

As a color layer (semi-transmissive layer), a material other than a photosensitive resin is used. For example, a water-soluble photosensitive dye base such as gelatin or casein is coated on the entire surfaces of upper portions of periodic patterns. Then, the photosensitive dye base is irradiated with ultraviolet rays using, for example, a galvano scanner, so as to form predetermined patterns, thereby crosslinking reacting the photosensitive dye base. Furthermore, the photosensitive dye base is developed by a developing solution to obtain island patterns, and the island patterns undergo dyeing using an aqueous dye solution, thereby forming color layer patterns.

Color layer (semi-transmissive layer) patterns are formed by selectively irradiating a laser beam.

Color layer (semi-transmissive layer) patterns are selectively formed using a print method such as relief printing, intaglio printing, or an ink-jet printer.

As transmittances of color layers (semi-transmissive layers), values other than 25%, 50%, 75%, and 100% are used.

## Claims

1. A scale (SCL), for an absolute encoder, on which a plurality of marks are arranged with a predetermined space therebetween at a predetermined pitch along at least one direction, comprising:
a base (Ba, G) including a plurality of light-reflective, or light-transmissive marks arranged with the predetermined space therebetween at the predetermined pitches along the at least one direction,
wherein a film (HTL, HT), which attenuates light, is formed with light cured material on a first subset of the plurality of marks so that an amount of light obtained via each of the first subset is different from that obtained via each of a second subset, on which the film is not formed or is formed with attenuation thereby different from that by the film on the first subset, of the plurality of marks,
wherein successive marks, arranged at the predetermined pitch, of the plurality of marks correspond to a code sequence for obtaining an absolute position or angle of the scale in that the successive marks are arranged with the predetermined space and an amount of light obtained via each of the successive marks depends on whether the film is thereon.

2. The scale according to claim 1, **characterized in that** the base is light-absorptive, and the plurality of marks are light-reflective.

3. The scale according to claim 1, **characterized in that** the base is light-reflective, and the plurality of marks are light-reflective.

4. The scale according to claim 1, **characterized in that** the base is light-transmissive, and the plurality of marks are light-transmissive.

5. The scale according to any one of claims 1 to 4, **characterized in that** a plurality of types of the film are formed on respective subsets of the plurality of marks, the plurality of types of the film being different from each other in a degree of attenuation of the light.

6. The scale according to any one of claims 1 to 5, **characterized in that** the film includes a light-absorptive material.

7. The scale according to claim 5, **characterized in that** the plurality of types of the film are same in composition and different from each other in thickness.

8. The scale according to claim 5, **characterized in that** the plurality of types of the film are different from each other in composition.

9. The scale according to claim 5, **characterized in that** number of types of the plurality of types is not less than three, and the plurality of marks are arranged along each of two directions which are not parallel to each other.

10. An absolute encoder **characterized by** comprising:
a scale (SCL) according to any one of claims 1 to 9;
a detector (PDA) configured to detect a predetermined number of marks of the plurality of marks arranged in the scale; and
a processor (CULC) configured to obtain a position of the scale relative to the detector based on an output of the detector.

11. A method of manufacturing a scale (SCL), for an absolute encoder, on which a plurality of marks are arranged with a predetermined space therebetween at a predetermined pitch along at least one direction, the method comprising:
preparing a base (Ba, G) including a plurality of light-reflective or light-transmissive marks arranged with the predetermined space therebetween at the predetermined pitch along the at least one direction; and
forming a film (HTL, HT), which attenuates light, with light cured material on a first subset of the plurality of marks so that an amount of light obtained via each of the first subset is different from that obtained via each of a second subset, on which the film is not formed or is formed with attenuation thereby different from that by the film on the first subset, of the plurality of marks,
wherein the forming of the film being performed by coating light curing material over the plurality of marks, irradiating the light curing material on a subset of the plurality of marks with light, and removing uncured light curing material on another subset of the plurality of marks.

## Patentansprüche

1. Skala (SCL) für einen Absolutencoder, auf dem eine Mehrzahl Markierungen mit einem vorbestimmten Abstand dazwischen an einer vorbestimmten Teilung entlang zumindest einer Richtung angeordnet sind, mit:
einer Basis (Ba, G) mit einer Mehrzahl von lichtreflektierenden oder lichtdurchlässigen Markierungen, die mit dem vorbestimmten Abstand dazwischen an der vorbestimmten Teilung entlang der zumindest einen Richtung angeordnet sind,
wobei ein Film (HTL, HT), der Licht abmildert, mit einem lichtgehärteten Material auf einem ersten Untersatz der Mehrzahl der Markierungen so ausgebildet ist, dass eine Lichtmenge, die über jeden des ersten Untersatzes erhalten wird, unterschiedlich von der ist, die über jeden von einem zweiten Untersatz erhalten wird, auf dem der Film nicht ausgebildet ist, oder mit einer Abmilderung ausgebildet ist, und dadurch unterschiedlich von der des ersten Films des ersten Untersatzes der Mehrzahl der Markierungen ist,
wobei
aufeinanderfolgende Markierungen, die an der vorbestimmten Teilung angeordnet sind, der Mehrzahl der Markierungen einer Codesequenz zum Erhalten einer Absolutposition oder eines Winkels der Skala darin entsprechen, dass die aufeinanderfolgende Markierungen mit dem vorbestimmten Abstand angeordnet sind, und eine über jede der aufeinanderfolgenden Markierungen erhaltene Lichtmenge davon abhängt, ob sich der Film darauf befindet.

2. Skala nach Anspruch 1, **dadurch gekennzeichnet, dass** die Basis lichtabsorbierend ist, und die Mehrzahl der Markierungen lichtreflektierend ist.

3. Skala nach Anspruch 1, **dadurch gekennzeichnet, dass** die Basis lichtreflektierend ist, und die Mehrzahl der Markierungen lichtreflektierend ist.

4. Skala nach Anspruch 1, **dadurch gekennzeichnet, dass** die Basis lichtdurchlässig ist, und die Mehrzahl der Markierungen lichtdurchlässig sind.

5. Skala nach einem der Ansprüche 1 bis 4, **dadurch gekennzeichnet, dass** eine Mehrzahl der Arten des Films auf entsprechenden Untersätzen der Mehrzahl der Markierungen ausgebildet ist, die Mehrzahl der Arten des Films voneinander in einem Grad einer Abmilderung des Lichts unterschiedlich sind.

6. Skala nach einem der Ansprüche 1 bis 5, **dadurch gekennzeichnet, dass** der Film ein lichtabsorbierendes Material hat.

7. Skala nach Anspruch 5, **dadurch gekennzeichnet, dass** die Mehrzahl der Arten des Films von der gleichen Zusammensetzung und in der Dicke voneinander unterschiedlich sind.

8. Skala nach Anspruch 5, **dadurch gekennzeichnet, dass** die Mehrzahl der Arten des Films in der Zusammensetzung voneinander unterschiedlich sind.

9. Skala nach Anspruch 5, **dadurch gekennzeichnet, dass** die Anzahl der Arten der Mehrzahl der Arten nicht weniger als drei beträgt, und die Mehrzahl der Markierungen entlang jeder von zwei Richtungen angeordnet sind, die nicht parallel zueinander liegen.

10. Absolutencoder, **gekennzeichnet durch** Umfassen von:
einer Skala (SCL) nach einem der Ansprüche 1 bis 9;
einem Detektor (PDA) der konfiguriert ist, eine vorbestimmte Anzahl von Markierungen der Mehrzahl der Markierungen zu entdecken, die in der Skala angeordnet sind; und
einem Prozessor (CULC), der konfiguriert ist, eine Position der Skala relativ zu dem Detektor ausgehend von einer Ausgabe des Detektors zu erhalten.

11. Verfahren zum Herstellen einer Skala (SCL) für einen Absolutencoder, auf dem eine Mehrzahl Markierungen mit einem vorbestimmten Abstand dazwischen an einer vorbestimmten Teilung entlang zumindest einer Richtung angeordnet ist, wobei das Verfahren umfasst:
Vorbereiten einer Basis (Ba, G) mit einer Mehrzahl von lichtreflektierenden oder lichtübertragenen Markierungen, die mit dem vorbestimmten Abstand dazwischen von der vorbestimmten Teilung entlang der zumindest einen Richtung angeordnet sind; und
Ausbilden eines Licht abmildernden Films (HTL, HT) der Mehrzahl der Markierungen, mit einem lichtaushärtenden Material auf einem ersten Untersatz der Mehrzahl der Markierungen, so dass eine Lichtmenge, die über jeden des ersten Untersatzes erhalten wird, unterschiedlich von der ist, die über jeden eines zweiten Untersatzes erhalten wird, auf dem der Film nicht ausgebildet ist, oder der mit einer Abmilderung ausgebildet ist, und dadurch unterschiedlich von der des Films auf dem ersten Untersatzes ist,
wobei das Ausbilden des Films durch Beschichten eines lichtaushärtenden Materials über der Mehrzahl der Markierungen, Bestrahlen des lichtaushärtenden Materials auf einem Untersatz der Mehrzahl der Markierungen mit Licht und Entfernen des lichtaushärtenden Materials auf einem anderen Untersatz der Mehrzahl der Markierungen durchgeführt wird.

## Revendications

1. Échelle (SCL), pour un codeur absolu, sur laquelle une pluralité de graduations sont agencées avec un espace prédéterminé entre elles selon un pas prédéterminé le long d'au moins une direction, comprenant :
une base (Ba, G) comportant une pluralité de graduations réfléchissant la lumière ou transmettant la lumière agencées avec l'espace prédéterminé entre elles selon le pas prédéterminé le long de l'au moins une direction,
où un film (HTL, HT), qui atténue la lumière, est formé avec un matériau durci à la lumière sur un premier sous-ensemble de la pluralité de graduations de sorte qu'une quantité de lumière obtenue par l'intermédiaire de chacune du premier sous-ensemble soit différente de celle obtenue par l'intermédiaire de chacune d'un deuxième sous-ensemble, sur lequel le film n'est pas formé ou est formé avec une atténuation ainsi différente de celle par le film sur le premier sous-ensemble, de la pluralité de graduations,
où des graduations successives, agencées selon le pas prédéterminé, de la pluralité de graduations correspondent à une séquence de code pour obtenir une position ou un angle absolu(e) de l'échelle, les graduations successives sont agencées avec l'espace prédéterminé et une quantité de lumière obtenue par l'intermédiaire de chacune des graduations successives dépend du fait que le film est sur celle-ci.

2. Échelle selon la revendication 1, **caractérisée en ce que** la base absorbe la lumière, et la pluralité de graduations réfléchissent la lumière.

3. Échelle selon la revendication 1, **caractérisée en ce que** la base réfléchit la lumière, et la pluralité de graduations réfléchissent la lumière.

4. Échelle selon la revendication 1, **caractérisée en ce que** la base transmet la lumière, et la pluralité de graduations transmettent la lumière.

5. Échelle selon l'une quelconque des revendications 1 à 4, **caractérisée en ce qu'**une pluralité de types du film sont formés sur des sous-ensembles respectifs de la pluralité de graduations, la pluralité de types du film étant différents les uns des autres quant à un degré d'atténuation de la lumière.

6. Échelle selon l'une quelconque des revendications 1 à 5, **caractérisée en ce que** le film comporte un matériau absorbant la lumière.

7. Échelle selon la revendication 5, **caractérisée en ce que** la pluralité de types du film ont la même composition et sont différents les uns des autres quant à l'épaisseur.

8. Échelle selon la revendication 5, **caractérisée en ce que** la pluralité de types du film sont différents les uns des autres quant à la composition.

9. Échelle selon la revendication 5, **caractérisée en ce qu'**un nombre de types de la pluralité de types n'est pas inférieur à trois, et la pluralité de graduations sont agencées le long de chacune des deux directions qui ne sont pas parallèles l'une à l'autre.

10. Codeur absolu, **caractérisé en ce qu'**il comprend :
une échelle (SCL) selon l'une quelconque des revendications 1 à 9 ;
un détecteur (PDA) configuré pour détecter un nombre prédéterminé de graduations de la pluralité de graduations agencées dans l'échelle ; et
un processeur (CULC) configuré pour obtenir une position de l'échelle par rapport au détecteur sur la base d'une sortie du détecteur.

11. Procédé de fabrication d'une échelle (SCL), pour un codeur absolu, sur laquelle une pluralité de graduations sont agencées avec un espace prédéterminé entre elles selon un pas prédéterminé le long d'au moins une direction, le procédé comprenant le fait :
de préparer une base (Ba, G) comportant une pluralité de graduations réfléchissant la lumière ou transmettant la lumière agencées avec l'espace prédéterminé entre elles selon le pas prédéterminé le long de l'au moins une direction ; et
de former un film (HTL, HT), qui atténue la lumière, avec un matériau durci à la lumière sur un premier sous-ensemble de la pluralité de graduations de sorte qu'une quantité de lumière obtenue par l'intermédiaire de chacune du premier sous-ensemble soit différente de celle obtenue par l'intermédiaire de chacune d'un deuxième sous-ensemble, sur lequel le film n'est pas formé ou est formé avec une atténuation ainsi différente de celle par le film sur le premier sous-ensemble, de la pluralité de graduations,
dans lequel la formation du film étant réalisée en appliquant un matériau durcissant à la lumière sur la pluralité de graduations, en irradiant le matériau durcissant à la lumière sur un sous-ensemble de la pluralité de graduations avec la lumière, et en éliminant un durcissant à la lumière non durci sur un autre sous-ensemble de la pluralité de graduations.
